# EUROPEAN PATENT APPLICATION

(11) **EP 2 453 398 A1**
(43) Date of publication of application: **16.05.2012**
(21) Application number: 11155987.8
(22) Date of filing: 25.02.2011
(51) Int. Cl.: G06Q 10/00, G06Q 30/00, G06K 17/00, G07D 7/00

(54) **Product authentication system**

(30) Priority: 12.11.2010 EP 10014556
(71) Applicant: NXP B.V., 5656 AG Eindhoven (NL)
(72) Inventor: Meyn, Hauke, 5656 AE, Eindhoven (NL); Brands, Jan Rene, 5656 AE, Eindhoven (NL)
(74) Representative: Krott, Michel

(57) **Abstract**

A product authentication system 100 comprising an electronic tag 110 for applying to a physical product, the tag comprising a memory, a number being stored in the memory, a mobile data processing device 120, the mobile data processing device being configured for reading the number from the tag, and wherein the mobile data processing device is configured for determining the authenticity of the product by determining the authenticity of the number.

## Description

### FIELD OF THE INVENTION

The invention relates to a product authentication system.

The invention further relates to an electronic tag, a server, a mobile data processing device, a method and a computer program.

### SUMMARY OF THE INVENTION

A product authentication system is provided comprising an electronic tag for applying to a physical product, the tag comprising a memory, a number being stored in the memory, a mobile data processing device, the mobile data processing device being configured for reading the number from the tag, wherein the mobile data processing device is configured for determining the authenticity of the product by determining the authenticity of the number.

A further aspect of the invention concerns a method for equipping a physical product with an electronic trademark. The method comprises providing a physical product with a tag; the tag has a semiconductor memory storing data with a unique identifier of the physical product, the memory is readable by a reader having an NFC data communication interface, the method comprises providing a software application for installing on the reader; the method comprises maintaining a database on a server storing further data having a predetermined correspondence with the unique identifier the method comprises receiving from the reader the data, searching the database for retrieval of the further data; if the further data is retrieved the method comprises determining a match between the data received and the further data retrieved; if the further data is not retrieved the method comprises responding to the reader with a fist message; if there is a match between the data and the further data, the method comprises responding to the reader with a second message if there is no match, responding to the reader with a third message.

A unique identifier is an example of a unique number. An example of a reader having an NFC data communication interface capable of reading the memory of the tag is a mobile phone having a local communication element configured for NFC.

In an embodiment the further data comprises the unique identifier. In an embodiment the further data comprises an encryption of the unique identifier.

For example, determining a match between the data received and the retrieved further data may comprise determining that the further data comprises the unique identifier.

The fist message may be used to signal to the user that the tag was not recognized. The second message may be used to signal to the user that the tag is likely a legitimate tag. The third message may be used to the user that there is no match.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Fig. 1a is a block diagram illustrating an embodiment of the product authentication system according to the invention,
Fig. 1b is a block diagram further illustrating the embodiment of the product authentication system according to the invention,

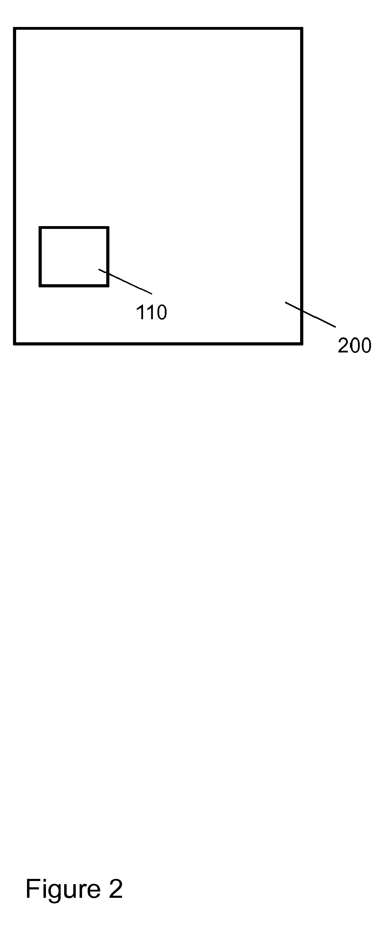

Fig. 2 is a schematic illustration of a product provided with a tag.

Throughout the Figures, similar or corresponding features are indicated by same reference numerals.

### List of Reference Numerals:

- 100: a product authentication system
- 110: a tag
- 112: a local communication element
- 114: a memory
- 120: a mobile phone
- 122: a local communication element
- 124: a data network communication element
- 130: a server
- 134: a data network communication element
- 132: a database
- 140: a product manufacturer
- 150: a tag manufacturer
- 200: a product

### DETAILED DESCRIPTION OF THE EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

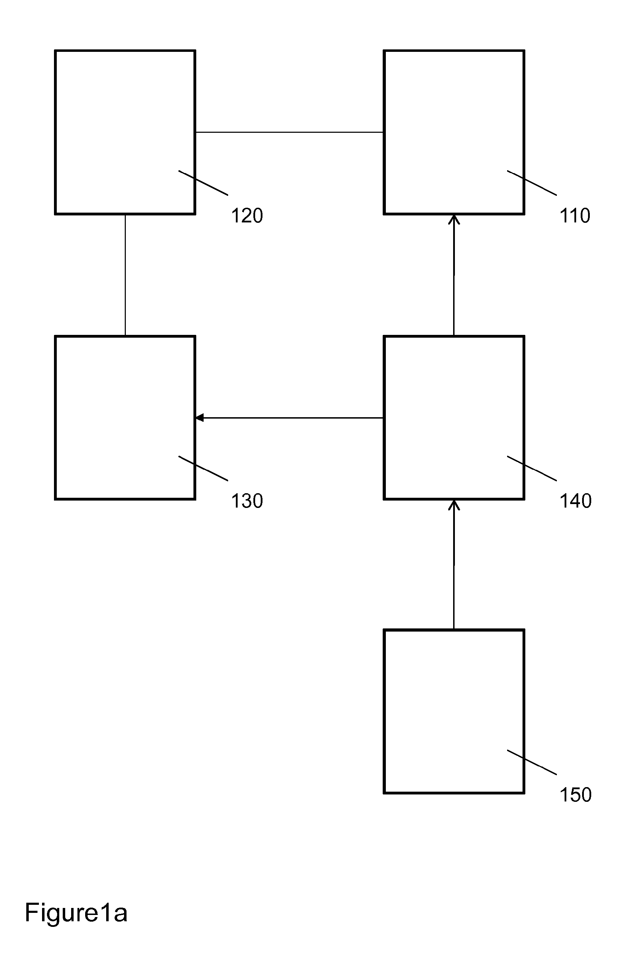

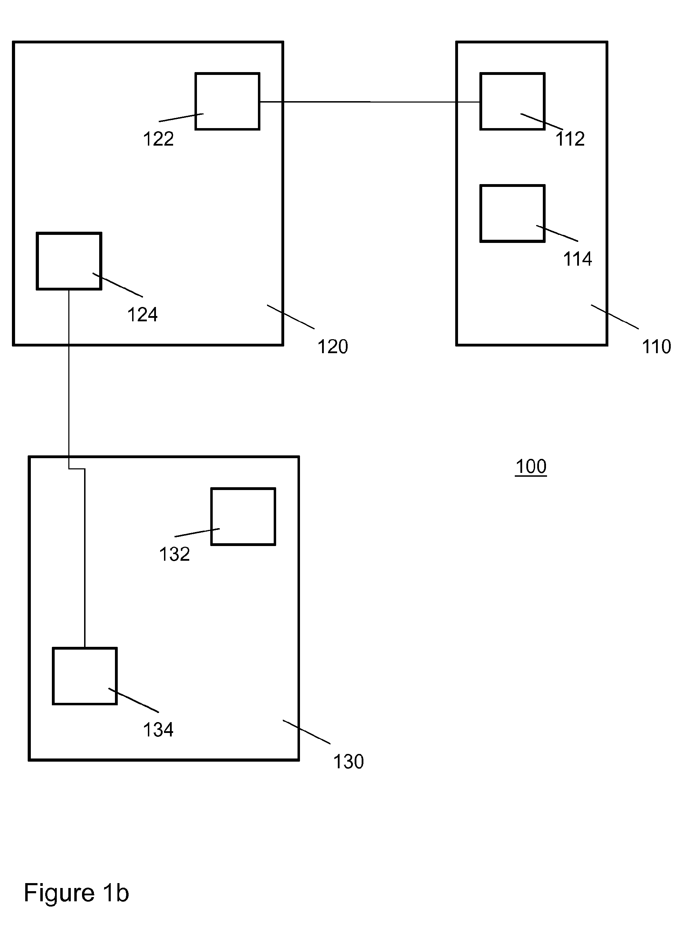

Fig. 1a and 1b schematically illustrate a product authentication system 100. Figure 1a shows part of the system including a number of possible elements of the components. Fig. 1b shows one way in which the system shown in Fig. 1a may include further system components.

The invention concerns a product authentication system. In overview one way of operating the system is as follows. A product manufacturer 140 manufactures a (typically) large quantity of a particular high-value product. It is assumed that the high-value product is imitated, e.g. counterfeited, because of its appearance of high-value in the market. The product manufacturer applies each manufactured product with a tag. For example, the product manufacturer may obtain the tags from a tag manufacturer 150. In each one of the tags a number is stored. This number may later be used to authenticate the product, say by potential buyers of the product. The buyer may use a device such as a mobile phone to obtain the number from the tag. The tag is then forwarded, e.g., send to a server. The server can then verify the authenticity of the product.

The system thus avoids the need of expensive product inspectors which look at a large number of sample products in order to detect counterfeiting. This job may be left to the actual buyer. Even if some potential buyers may not cooperate, even if a small percentage of buyers will participate it will deter counterfeiting, since the likelihood of being caught is increased. A further advantage of the system lies in avoiding a cryptographic co-processor in tag 110.

The product authentication system may thus be regarded as a type of electronic trade marking system.

A more detailed description is give below. Note that various options are possible and that these options may be combined.

The system comprises a tag 110. Tag 110 is an electronic component that may be applied to products. For example, tag 110 may be an RFID tag. For example, tag 110 may be a tag conforming to the standard ISO1444 and/or conforming to the standard ISO15693 As a further example, tag 110 may in addition or alternatively be a so-called Felica tag. Tag 110 may also be a smart card. Tag 110 may be an electronic memory product suitable for applying to a product. Preferably the electronic memory product is a contactless electronic memory product.

Advantageously, tag 110 is a so-called passive RFID tag. With such a tag mobile phone 120 provides a carrier field and tag 110 answers by modulating that field. In this way, tag 110 may draw its operating power from the mobile phone-provided electromagnetic field. Using a passive RFID tag further reduces cost, but also makes it harder to include processing capabilities. Using the invention, cryptographic processing is avoided at the tag, thus allowing the use of passive tags.

Tag 110 comprises a memory 114. Memory 114 is configured for storing data. Memory 114 may be a read-only memory, a write-once read-many memory, or a read-write memory, e.g. an EEPROM. A write-once read-many memory has the advantage that it reduces tampering possibilities.

Tag 110 comprises a local communication element 112 for local communication. Tag 110 is configured for communicating using local communication element 112 with a mobile phone 120 when mobile phone 120 is in sufficiently close proximity to tag 110. Tag 110 need not be able to communicate over long distances, it suffices to allow communication over short distances, say less than 10 cm, or even less than 4 cm.

Mobile phone 120 comprises a local communication element 122 at least configured for reading from tag 110, in particular from memory 114. Optionally, mobile phone 120 may also support writing to tag 110, in particular to memory 114. Writing support by local communication element 122 is needed in embodiments which require writing from mobile phone 120 to tag 110 as defined below.

Preferably, local communication element 112 and local communication element 122 are both configured to communicate with each other contactless, i.e., wireless.

Preferably, local communication element 112 and local communication element 122 are both configured for Near Field Communication (NFC).

Near Field Communication or NFC, is a short-range high frequency wireless communication technology which enables the exchange of data between devices over about 10 centimeter (around 4 inches) distance. The technology is an extension of the ISO/IEC 14443 proximity-card standard (proximity card, RFID) that combines the interface of a smartcard and a reader into a single device. An NFC device can preferably communicate with existing ISO/IEC 14443 smartcards and readers, and/or optionally with other NFC devices, and is thereby compatible with existing contactless infrastructure.

Mobile phone 120 further comprises a data network communication element 124 configured to communicate with a data network possibly over long distances. For example, data network communication element 124 may be a GPRS or a UMTS communication element.

Preferably, data network communication element 124 is configured to communicate at least to a first router of the data network wirelessly, but this is not necessary. Instead of a mobile phone 120 a computer could be used, the computer being configured for NFC and comprising an internet connection over a wire, say, over ADSL. The computer may be a desktop computer.

A mobile phone 120 is an example of a mobile data processing device comprising a local communication element 122 and data network communication element 124. Instead of a mobile phone, say a PDA, net book, etc, may be used.

Data network communication element 124 is configured to connect to server 130. Preferably, data network communication element 124 is configured to connect to server 130 over the internet, or at least partly over an internet connection. Data network communication element 124 may be a conventional mobile phone data communication element. Data network communication element 124 comprises a data processor, say a CPU, to process and/or display data coming from tag 110 and/or data network communication element 124. The data processor is configured for executing an application for controlling the interaction between mobile phone 120 and server 130.

Server 130 comprises a data network communication element 134 configured for communicating with server 130. Server 130 may further comprise a database 132. Some embodiments do not need a database however.

One way of using the above system is as follows.

During an enrollment phase, a number is placed in memory 114. Preferably, the number is written to memory 114 by a product manufacturer 140. To increase the usability of the number for identification purposes, it is preferred that the number is used only for this particular tag 110. That is the number is a unique number. It is preferred if the number is globally unique. This can be achieved in a number of ways, for example, the unique number may be a serial number, or an encryption of a serial number using a unique key. The number may also be a random number. Although a random number need not be unique, for practical purposes the number can regarded as unique if it is long enough, e.g., comprises a sufficient number of bits. For most purposes 64 bits may be regarded as unique. For lower-grade applications, wherein a fault may be accepted to a degree, 32 bits may suffice. The unique number may comprise a time stamp. It is understood that the number need not be formatted as a number, but may also be formatted as a string, a data record etc. A number may be regarded as a data item.

Using random numbers, e.g. pseudo random or true random, has the advantage that better guarantees may be obtained for the uniqueness of the number. A product or tag manufacturer or may guarantee that a number is unique in so-far he is concerned, e.g., by using a serial number. However, one runs the risk that other manufacturer have started their serial from the same or a close starting point. In that case, many number would not be unique, when the different manufacturers are concerned. To avoid this, one may use random numbers. A random number has a fixed chance of being repeated elsewhere, depending on its length, i.e., the range from which it is chosen. The number may also comprise a random number, but be otherwise built up from identifiers, serials numbers and the like.

The number may comprise a random number, such as a random 64-bit number. When a random component is used, server 130 preferably also used a database 132.

The number is typically also stored in database 132. We will show below how server 130 may omit database 132.

During a use-phase, a user of product authentication system 100 may be a product 200 which includes tag 110. Note that tag 110 may be applied to a variety of products. We consider this invention to be particular useful when tag 110 is applied to high-value products, including branded products, expensive products, for example, batteries, perfume, liquor, etc. Furthermore the invention is well suited to trademarked goods. Tag 110 may also be applied to medicines, e.g., to the box or bottle in which they are stored, or to a blister pack. Preferably, tag 110 is applied to product 200 in a tamper evident manner.

Mobile phone 120 is configured to obtain from tag 110 the unique number of tag 110, e.g., by reading from memory 114, e.g. by sending a suitable read command, or engaging in a read-protocol with tag 110. Note that we do not require that tag 110 protects the confidentiality of the number. For example, local communication element 112 may send the number in the plain to local communication element 122. In particular it is not required that tag 110 has the capabilities to encrypt a message. It is not required that tag 110 is capable of signing a message. Tag 110 may engage in a limited form of authentication. For example, tag 110 may not activate unless it has received from mobile phone 120 a secret code, say a secret password. The secret code could be embedded in the application stored on mobile phone 120 and which mobile phone 120 is configured to execute.

After mobile phone 120 has obtained the number, mobile phone 120 may try to verify the origin of tag 110 and by implication of product 200. Mobile phone 120 may use the number in a number of ways.

Mobile phone 120 may establish communication with server 130. Mobile phone 120 sends the number to server 130. Server 130 determines if the number is present in database 132. If the number is not present, server 130 sends a message to mobile phone 120 that the tag 110 is not authentic, and is likely fake. In response mobile phone 120 displays a message to the user, e.g., a message warning the user that the product is likely not an authentic product, e.g., counterfeited.

An advantage of this system is that users can easily verify the authenticity of products themselves. They may even do this before they have bought the product.

If server 130 finds that the number is present in database 132 he may do further checks that may indicate that tag 110 is not authentic. For example, a counterfeiter may have bought empty tags and programmed them with a number copied from an authentic tag such a tag 110. The further checks may detect this kind of fraud.

One such further check is to count the number of times server 130 has received a particular number. If the number of times the number has been received is higher than predetermined limit, server 130 will report tag 110 and product 200 as fake as above. For example, if server 130 has received the same number more than a 1000 times, the number has likely been copied. Server 130 may also count the number of different mobile phones, such as mobile phone 120, that have sent a particular number, e.g. by counting the number of different caller-id's. If the number of different mobile phones is higher than a predetermined further limit, say a 100, tag 110 may be reported as fake. When large quantities of products are used, these limits may need to be increased to reduce the chance of false positives.

By using the predetermined limit and/or further predetermined limit, the system can compensate for a short unique number. This is of particular advantage since the memory 114 in a tag 110 is often very small to keep the cost of tag 110 as low as possible. If the range from which the number is chosen is small compared to the number of products to which it is applied, than it may happen that the same number needs to be used multiple times. In that case, server 130 may be not be configured to report a tag 110 or product 200 as fake as soon as its encounters a number twice, but by counting the number of times a number is encountered it still provides a deterrent against counterfeiting, yet still avoiding the need for large memories memory 114.

For example, if only 32 bits are available, or even less, say 16 bit or 24, for the number in memory 114 than the using the predetermined limit and the further limit is particularly advantageous.

Also when random numbers are used for the number it may happen that a number is used twice by chance, even if more than 32 bits are used. For example, this may be caused by the so-called birthday paradox. In that case using the predetermined limit and the further limit is useful. Although in this case (depending on size of the range) the limits may be set lower.

Instead of server 130 reporting as fake to mobile phone 120, server 130 may also or alternatively inform other authorities, such as local counsel, that a fake or likely fake product has been detected.

If server 130 determines that tag 110 is authentic, or if it cannot prove the contrary, it may send additional data to mobile phone 120. For example, server 130 may send information regarding product use, information on how to identify fake products, advertising and the like. Server 130 may send data configured for audio rendering, video rendering etc.

Instead of using a database product authentication system 100 may use self-verifying numbers. A self verifying number is a number the origin of which can be verified using a cryptographic algorithm without using a database. One way of creating self verifying numbers is as follows. A seed is concatenated with a sufficiently long prefix and/or postfix. The pre-fix and post-fix are bits string, and/or numbers, say the size of prefix and/or postfix is together 32 bits, or 64. The concatenation is encrypted with a fixed predetermined cryptographic encryption key. Server 130 can verify the origin of the number by decrypting with a cryptographic decryption key corresponding to the encryption key. If after decryption the prefix and postfix are as expected, e.g., as originally applied to the seed, the number is regarded as authentic. In addition server 130 may use the counting test using the predetermined limit and/or further predetermined limit. The encryption / decryption may be symmetric or asymmetric. Symmetric encryption is faster. Asymmetric has the advantage that the verification test may be done at mobile phone 120 instead of at server 130, for example the decryption key may be present in the application on mobile phone 120.

Mobile phone 120 may receive during the use phase from server 130 a URL. The URL may be stored in memory 114 and put there during the enrollment phase. Mobile phone 120 may use the URL to connect to server 130, e.g., the URL may identify a website running on server 130. The URL is an example of a data network address.

In a preferred embodiment, mobile phone 120 constructs an URL from data received from tag 110, e.g. from the number. For example, mobile phone 120 may prefix a number, say number 123456, with a starting part of a URL, say,
http://www.someverificationservice.com/, to obtain a concatenation, say, http://www.someverificationservice.com/123456. Other options of the http or https protocol may be combined in the URL.

Note that even if mobile phone 120 is capable of verifying the authenticity of tag 110 by itself, there is still an advantage of contacting server 130. For the user the advantage may lie in receiving information of value. In particular current, actual information, may be distributed in this manner; for example, information regarding re-calls or new safety information is particular suitable for distribution via this channel. For the manufacturer of product 200, the value may lie in keeping track of the distribution of its products. For example, product manufacturer 140 may set up a buyer's incentive program, wherein points are acquired in exchange for buying the product.

Additional possibilities which may be included with any of the above described options include the following.

Geotags. Mobile phone 120 may comprise a GPS system. Mobile phone 120 may then be configured to send geographic coordinates, such as obtained from the GPS, to server 130. Mobile phone 120 may send the coordinates together with the number. Mobile phone 120 may only send the coordinates after receiving a message from server 130 indicating that tag 110 is fake, or at least considered likely to be fake. This has the advantage that server 130 is aware of the precise location where the infringing goods are. It is not considered possible to integrate a GPS sender/receiver with a tag, however by integrating it in mobile phone 120, one obtains the same benefit.

Pictures. Mobile phone 120 may comprise a photo-camera. After mobile phone 120 receives a message of server 130 that the product is fake, the user can use mobile phone 120 to take a picture of the counterfeiting goods. In this way, the user can participate in obtaining evidence of the counterfeited goods. This option may also be combined with the previous GPS options.

Mobile phone 120 may ask permission of a user of mobile phone 120 before sending information, such as the number, the geographic coordinates, and or a picture to server 130.

The tag may be produced by a tag manufacturer 150. Tag manufacturer 150 may include in tag 110 a further number, for example a unique identification number (UID) number. The UID is a value written by the tag manufacturer during the manufacturing process; the UID is preferably unique for each contactless memory. The UID may be used by the application on mobile phone 120 and server 130 to identify each tag individually. The UID may be stored in a further memory comprised in tag 110 (not shown). The further memory is preferably read-only. In an embodiment, the UID is 64 bits.

The UID may be used directly as the number, thus avoiding that the manufacturer needs to write a number himself to memory 114. However, the UID may also be used in addition to the number.

For example, the number may be cryptographically bound to the UID. For example, the number may be concatenated to the UID. The concatenation may be signed with a signature or encryption key. If mobile phone 120 comprises the appropriate signature verification key, it can be verified by mobile phone 120 that the number is bound to the UID, by verifying the signature. This makes it even harder to make a fake copy, since the attacker will not have the signing key, even if he could obtain a verification key from a mobile phone. A suitable asymmetric signature scheme may comprise RSA; For example, the PKCS#1 standard describes RSA signatures, e.g., the Probabilistic Signature Scheme for RSA (RSA-PSS), which may be used.

After product 200 has been bought by the customer tag 110 may be used for other purposes. For example, a user may write a message using mobile phone 120 to tag 110. When the product is later used, for example, when it has been given as a gift, the message may be recovered using a further NFC reader, say the phone of the other gift-receiver.

Alternatively, the buyer of product 200 may leave a message at server 130, if a later owner of product 200, uses tag 110 to establish a connection with server 130 he may receive from mobile phone 130 the message on his mobile phone.

The invention may use several methods. To further clarify a possible sequence of steps that may be taken in a system according to the invention is given below.

### During an enrollment phase

- applying a tag to a product
- storing a number in the tag
   ○ optionally, the number is a unique number
   ○ optionally, the number is a random number
- optionally, the tag comprises a further number, preferably the further number being read-only,
   ○ Optionally, storing a data item that cryptographically binds the number and the further number, the data item may be a signature over both numbers.

### During a use phase

- reading the number from the tag, optionally using NFC
- obtaining a data network address, such as a URL
   ○ optionally, the data network address is stored in an application
   ○optionally, the data network address is contracted from a partial data network address stored in the application, and from the number, e.g., by concatenating a prefix with the number
   o Optionally, the number comprises the data network address.
- establishing a connection to a server 130 at the data network address
- optionally, the connection is an internet connection
- sending the number to the server, optionally sending the data item that cryptographically binds the number and the further number
- verifying the authenticity of the tag using the number
   ○ optionally, verifying that the number is comprised in a database, considering the tag fake if the number is not in the database,
   ○ optionally, verifying that that the data item that cryptographically binds the number and the further number, considering the tag fake if the data item is not correct,
- optionally counting how many times the number has been received
- Optionally if the counting exceed a predetermined limit considering the tag likely fake.
- optionally counting how many times the number has been received from different mobile phones,
   ○ Optionally if the counting exceed a predetermined limit considering the tag likely fake.

### Optionally, If the tag is considered fake or likely fake

- Sending a message from the server to the mobile phone.
- sending geographic coordinates from the mobile phone to the server.

### Optionally, If the tag is not considered fake or likely fake

- Sending a message from the server to the mobile phone.
- sending a private message from mobile phone to the server
   ○ Sending the private message from the server to the mobile phone, in case the number is received again.

For example, the server may execute the following method for authentication a product at a server, receiving at the server a number read from a mobile data processing device (120), determining at the server if the number is present in a database and if the number is not present in a database, reporting to the mobile data processing device that the number is not present in the database.

For example, a method for authentication a product comprising reading a number from a tag, and determining the authenticity of the product by determining the authenticity of the number.

Many different ways of executing a method according to the invention are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. Moreover, a given step may not have finished completely before a next step is started.

A method according to the invention may be executed using software, which comprises instructions for causing a processor system to perform the method. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example, processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

Below a number of additional refinements, alternative embodiments and advantages are discussed.

The product authentication system may be developed for NFC but does not need to use a secure element on the tag. The product authentication system may make use of an infrastructure provided by NFC enabled mobile phones. Securing products with tags, i.e., electronic labels, allows user to make sure that he buys an original high quality product, instead of a counterfeited product. An electronic label is an example of a tag.

A who user buys a high value product at some place may not trust seller. The user, i.e. the consumer, wants to make sure that the product is of a proven origin. This may be accomplished using the product authentication system.

In one version a manufacturer includes a, possibly hidden, electronic label at the product. The consumer scans the electronic label of his product, goes online and checks directly with the manufacturer if the tag id and contained data proves the origin at the manufacturer.

The label may also be use by the manufacturer may during the production of the product. Also, for marketing purposes, the invention may be used to establish a communication channel between an individual consumer that bought the product and the manufacturer of the product.

This embodiment may be refined in various ways.

The manufacturer allows the consumer to get a cryptographic key, to unlock additional data stored in the tag. Thus the consumer may manipulate the data on the tag after buying the product. For example, he may store a link to the internet where the person can put a message in case he wants to use the product as a present.

Additionally, the electronic label may be configured for receiving a "kill" command so that it can't be used anymore.

As a further option the product authentication system includes a dealer, i.e., a party which sells the product. Using an electronic device including a local connection element, such as a NFC reader and a data network element, the dealer may read the data in the tag and register the product as sold. Registering may be done directly with the server. Alternatively, he may store data on the tag indicating that the product is sold. When the product is later authenticated, the mobile data processing device, e.g. a mobile phone, may also send the data on the tag indicating that the product is sold to the server.

This allows having stolen devices to be detected in the hands of the consumer. This also allows the manufacturer to detect counterfeited copies at the dealer and/or at the consumer.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A product authentication system (100) comprising:
- an electronic tag 110 for applying to a physical product, the tag comprising a memory, a number being stored in the memory,
- a mobile data processing device (120), the mobile data processing device being configured for reading the number from the tag, and
- wherein the mobile data processing device is configured for determining the authenticity of the product by determining the authenticity of the number.

2. A product authentication system (100) comprising a server (130), the mobile data processing device (120) being configured sending the number to the server (130), the server being configured for determining the authenticity of the number, and for reporting the determined authenticity of the number to the data processing device (120).

3. A product authentication system (100) as in claim 2, wherein the server comprises a database, the server being configured for determining that the number is not authentic by determining that the number is not present in the database.

4. A product authentication system (100) as in any one of the preceding claims, wherein the number is a unique number.

5. A product authentication system (100) as in any one of the preceding claims, wherein the number is a random number.

6. A product authentication system (100) as in any one of claims 2, 3, 4 and 5, wherein the mobile data processing device (120) is configured for obtaining a data network address in dependency on both the number and on a predetermined partial data network address stored in the mobile data processing device (120), the mobile data processing device (120) being configured to establish a data network connection using the data network address.

7. A product authentication system (100) as in any one of claims 2, 3, 4, 5, and 6 wherein the server comprises a counter, the counter being configured for counting how many times the server (130) received the number, the server being configured for determining that the number is not authentic by determining that the counter exceeds a predetermined limit.

8. A product authentication system (100) as in any one of claims 2, 3, 4, 5, 6 and 7 wherein the server comprises a further counter, the further counter being configured for counting how many times the server (130) received the number from different mobile data processing devices, the server being configured for determining that the number is not authentic by determining that the further counter exceeds a predetermined limit.

9. A product authentication system (100) as in any one of claims 2, 3, 4, 5, 6 7 and 8 wherein the tag comprises a further memory, the further memory being read-only, the memory (114) comprises a data item that cryptographically binds the number and the further number, determining the authenticity of the number comprises determining the authenticity of the data item.

10. A product authentication system (100) as in any one of the preceding claims, wherein the mobile data processing device (120) comprises a sensor for determining geographic coordinates of the mobile data processing device, such as a GPS system, and wherein the mobile data processing device (120) is configured for sending the geographic coordinates of the mobile data processing device to a server, if the number is determined not be authentic.

11. A product authentication system (100) as in any one of the preceding claims wherein the mobile data processing device (120) is a mobile phone, and wherein the mobile phone and the tag are configured for NFC, and are configured for the number being read using NFC.

12. A server (130) as in any one of the preceding clams.

13. A mobile data processing device (120) as in any one of the preceding claims.

14. A tag (110) as in any one of the preceding claims.

15. Method of equipping a physical product with an electronic trademark, wherein:
the method comprises providing a physical product with a tag; the tag has a semiconductor memory storing data with a unique identifier of the physical product, the memory is readable by a reader having an NFC data communication interface, the method comprises providing a software application for installing on the reader; the method comprises maintaining a database on a server storing further data having a predetermined correspondence with the unique identifier, the method comprises receiving from the reader the data, searching the database for retrieval of the further data; if the further data is retrieved the method comprises determining a match between the data received and the further data retrieved; if the further data is not retrieved the method comprises responding to the reader with a fist message; if there is a match between the data and the further data, the method comprises responding to the reader with a second message if there is no match, responding to the reader with a third message.

16. A computer program comprising computer program code means adapted to perform all the steps of Claim 15 when the computer program is run on a computer, the computer program preferably being embodied on a computer readable medium.
